(19) Europäisches Patentamt
European Patent Office
Office européen des brevets

(11) **EP 4 601 112 A1**

(12) **EUROPEAN PATENT APPLICATION**
published in accordance with Art. 153(4) EPC

(43) Date of publication:
**13.08.2025 Bulletin 2025/33**

(21) Application number: 23883185.3

(22) Date of filing: 27.10.2023

(51) International Patent Classification (IPC):
*H01P 5/18* $^{(2006.01)}$

(52) Cooperative Patent Classification (CPC):
H01P 5/18

(86) International application number:
**PCT/KR2023/016936**

(87) International publication number:
**WO 2024/091081 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.10.2022 KR 20220140262

(71) Applicant: **Point2 Technology, Inc.**
**Seoul 06034 (KR)**

(72) Inventors:
• **SONG, Ha Il**
**Seoul 01775 (KR)**

• **WON, Hyo Sup**
**Seoul 08776 (KR)**
• **YOO, Jun Young**
**Seoul 07581 (KR)**
• **KWON, Kon An**
**Incheon 22858 (KR)**
• **LIM, Kyoo Hyun**
**Seoul 06276 (KR)**
• **CHOI, Han Ho**
**Seoul 06154 (KR)**
• **KWON, Woo Hyun**
**Seoul 06950 (KR)**

(74) Representative: **RGTH**
**Patentanwälte PartGmbB**
**Neuer Wall 10**
**20354 Hamburg (DE)**

(54) **SYSTEM FOR DUAL-BAND PLASTIC WAVEGUIDE TRANSMISSION**

(57) According to the present disclosure, a dual-band plastic waveguide transmission system is provided. The dual-band plastic waveguide transmission system may include: an RF receiver configured to receive, from an RF transmitter, a first signal of a first carrier frequency and a second signal of a second carrier frequency higher than the first carrier frequency; a plastic waveguide device configured to provide a communication channel between the RF transmitter and the RF receiver; and an interconnecting device including a first microstrip-to-waveguide transition (MWT) configured to transmit the first signal from the plastic waveguide device to the RF receiver, and a second MWT configured to transmit the second signal from the plastic waveguide device to the RF receiver. A frequency bandwidth of the first signal may be adjusted by the plastic waveguide device and the first MWT such that the first signal is received as an upper sideband signal, and a frequency bandwidth of the second signal may be adjusted by the plastic waveguide device and the second MWT such that the second signal is received as a lower sideband signal.

Fig. 2

EP 4 601 112 A1

**Description**

TECHNICAL FIELD

The present disclosure relates to a waveguide link, and more particularly to a dual-band plastic waveguide transmission system.

BACKGROUND

Demands for a wider input/output (I/O) bandwidth in data sensors are increasing along with explosive growth of network traffics. However, there are issues of functional and economical viewpoints in high-speed interconnects in the related art. Copper-based electrical links exhibit critical bandwidth limitations due to skin loss. Optical links require significant facility costs for a chip-to-fiber assembly, and E/O (electrical/optical) and O/E (optical/electrical) conversion devices in short-reach high-capacity links.

As a result of recent research conducted to obtain an alternative for solving such matters in the high-speed interconnects in the related art, plastic waveguide links that exhibit unique low-loss and wideband channel characteristics has been proposed as a promising solution for providing power- and cost-efficient high-speed interconnects. Accordingly, there is a need to develop a transmission system capable of implementing an ultra-high-speed data transmission via the plastic waveguide links.

SUMMARY

The present disclosure is to solve the above-mentioned problems, and the present disclosure is for the purpose of providing a dual-band plastic waveguide transmission system.

According to one embodiment of the present disclosure, there is provided a dual-band plastic waveguide transmission system. The dual-band plastic waveguide transmission system may include: a radio frequency (RF) receiver configured to receive, from an RF transmitter, a first signal of a first carrier frequency and a second signal of a second carrier frequency higher than the first carrier frequency; a plastic waveguide device configured to provide a communication channel between the RF transmitter and the RF receiver; and an interconnecting device including a first microstrip-to-waveguide transition (MWT) configured to transmit the first signal from the plastic waveguide device to the RF receiver, and a second MWT configured to transmit the second signal from the plastic waveguide device to the RF receiver. A frequency bandwidth of the first signal may be adjusted by the plastic waveguide device and the first MWT such that the first signal is received as an upper sideband signal, and a frequency bandwidth of the second signal may be adjusted by the plastic waveguide device and the second MWT such that the second signal is received as a lower sideband signal.

The RF communication system may further include: a duplexer connected to each of the first MWT and the second MWT and configured to transmit the first signal and the second signal from the plastic waveguide device.

The frequency bandwidth of the first signal may be adjusted by adjusting a lower cutoff frequency using the plastic waveguide device, and the frequency bandwidth of the second signal may be adjusted by adjusting an upper cutoff frequency using the plastic waveguide device.

The plastic waveguide device may include a dielectric tube having a rectangular cross-section, and the lower cutoff frequency of the first signal and the upper cutoff frequency of the second signal may be adjusted based on a transverse length and a longitudinal length of the cross-section of the dielectric tube.

The frequency bandwidth of the first signal may be adjusted by adjusting an upper cutoff frequency using the first MWT, and the frequency bandwidth of the second signal may be adjusted by adjusting a lower cutoff frequency using the second MWT.

Each of the first MWT and the second MWT may include: a probe element configured to receive a signal from a feeding line; and a slotted ground plane through which the signal radiated from the probe element passes to be transmitted to the plastic waveguide device.

The upper cutoff frequency of the first signal may be adjusted based on a length of the probe element of the first MWT and a slot dimension of the slotted ground plane of the first MWT, and the lower cutoff frequency of the second signal may be adjusted based on a length of the probe element of the second MWT and a slot dimension of the slotted ground plane of the second MWT.

The RF receiver may be configured to further receive, from the RF transmitter, a third signal of a third carrier frequency lower than the first carrier frequency, and a fourth signal of a fourth carrier frequency higher than the second carrier frequency. The interconnecting device may further include: a third MWT configured to transmit the third signal from the plastic waveguide device to the RF receiver; and a fourth MWT configured to transmit the fourth signal from the plastic waveguide device to the RF receiver. A frequency bandwidth of the third signal may be adjusted by the plastic waveguide device and the third MWT such that the third signal is received as the upper sideband signal, and a frequency bandwidth of the fourth signal may be adjusted by the plastic waveguide device and the fourth MWT such that the fourth signal is received as the lower sideband signal.

The RF communication system may further include: a quadplexer configured to transmit the first signal, the second signal, the third signal, and the fourth signal from the plastic waveguide device.

The frequency bandwidth of the first signal and the frequency bandwidth of the third signal may be adjusted by adjusting a lower cutoff frequency using the plastic waveguide device, and the frequency bandwidth of the second signal and the frequency bandwidth of the fourth signal may be adjusted by adjusting an upper cutoff frequency using the plastic waveguide device.

The frequency bandwidth of the first signal may be adjusted by adjusting an upper cutoff frequency using the first MWT, the frequency bandwidth of the second signal may be adjusted by adjusting a lower cutoff frequency using the second MWT, the frequency bandwidth of the third signal may be adjusted by adjusting the upper cutoff frequency using the third MWT, and the frequency bandwidth of the fourth signal may be adjusted by adjusting the lower cutoff frequency using the fourth MWT.

According to the present disclosure, it is possible to provide a transmission system capable of implementing an ultra-high-speed data transmission by adjusting frequency bandwidths of RF signals in a dual-band or a multi-band for single sideband transmissions, and transmitting and receiving the RF signals thus adjusted via a plastic waveguide link.

BRIEF DESCRIPTION OF THE DRAWINGS

FIG. 1 is an exemplary diagram illustrating a single sideband transmission.

FIG. 2 is an exemplary diagram illustrating a dual-band plastic waveguide transmission system according to one embodiment of the present disclosure.

FIG. 3 is an exemplary diagram illustrating a lower cutoff frequency and an upper cutoff frequency of a plastic waveguide channel response.

FIG. 4 is an exemplary diagram illustrating a configuration of a plastic waveguide device according to one embodiment of the present disclosure.

FIG. 5 is an exemplary diagram illustrating a cross-section of a package substrate including a microstrip-to-waveguide transition (MWT) according to one embodiment of the present disclosure.

FIG. 6A is an exemplary diagram illustrating a slotted ground plane along line A-A' of FIG. 5.

FIG. 6B is an exemplary diagram illustrating a probe element positioned along line B-B' of FIG. 5.

FIG. 7 is an exemplary diagram illustrating a multi-band plastic waveguide transmission system according to one embodiment of the present disclosure.

DETAILED DESCRIPTION

Hereinafter, some exemplary embodiments of the present disclosure will be described in detail with reference to the accompanying drawings. It should be noted that, in adding reference numerals to constituent elements throughout the drawings, the same constituent elements are made to have the same numerals as possible even if they are displayed on the other drawings. In addition, detailed descriptions thereof will be omitted in the case where it is determined that detailed description of related known configurations or functions in describing the exemplary embodiments of the present disclosure prevents understanding of the exemplary embodiments of the present disclosure.

Various aspects of the present disclosure will be described below. The present disclosure described herein may be embodied in a wide variety of forms. Descriptions about specific structures and specific functions are merely exemplary. It will be apparent to those skilled in the art that, based on the example embodiments of the present disclosure described herein, one aspect may be implemented independently of other aspects and two or more aspects may be combined with each other in a variety of ways. For example, an apparatus may be implemented with any number of aspects described herein, or a method may be carried out by such an apparatus. Further, an apparatus may be implemented with other structures or other functions, or both such structures and such functions in addition to one or more aspects described herein. Further, such device may be implemented, or a method may be carried out by such an apparatus.

A radio frequency (RF) communication system according to the present disclosure may be configured such that an RF transmitter and an RF receiver communicates with each other via a plastic waveguide link that exhibits a low-loss wideband channel characteristic. Further, the dual-band plastic waveguide transmission system may be configured to simultaneously transmit and receive two or more RF signals at respective bandwidths in a dual-band or in a multi-band via the plastic waveguide link, thereby improving a transmission rate. Further, the dual-band plastic waveguide transmission system may be configured to adjust a cutoff frequency band of each RF signal to implement a single sideband transmission. This makes it possible to achieve a data rate of twice compared to a double sideband transmission, which further enhances the transmission rate.

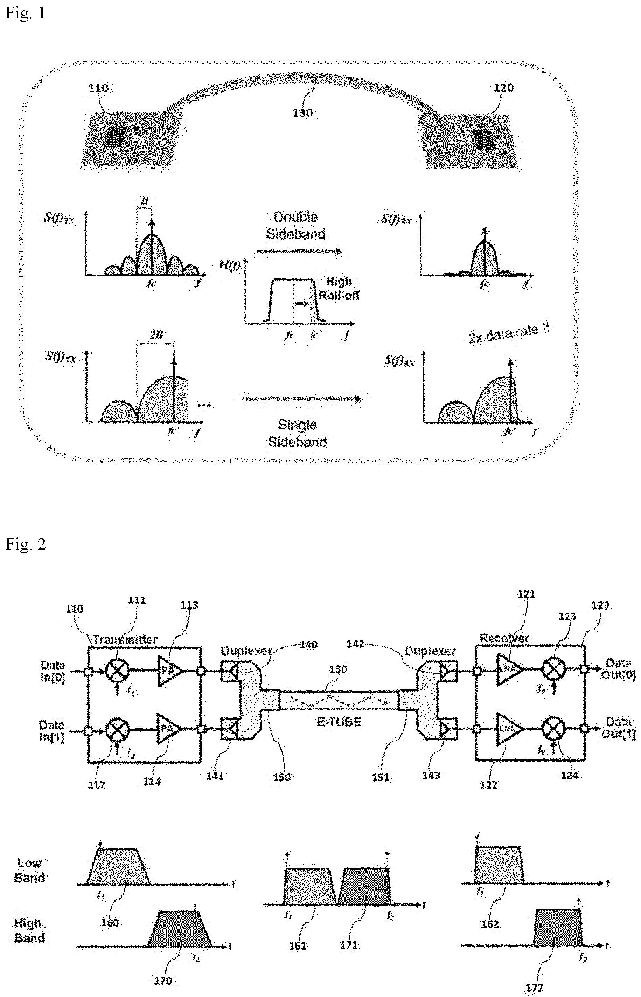

FIG. 1 is an exemplary diagram illustrating the single sideband transmission.

In the present disclosure, the single sideband transmission as illustrated in FIG. 1 may be applied to achieve the data rate of twice compared to the double sideband transmission. In one embodiment of the present disclosure, a slope of an upper cutoff frequency band of a signal may be adjusted, and a link frequency characteristic may be sharply rolled-off (that is, highly rolled-off) at the upper cutoff frequency so that an upper sideband signal may be suppressed and a transmission signal including primarily a lower sideband signal may be provided to a receiver. In another embodiment of the present disclosure, a slope of a lower cutoff frequency band may be adjusted, and the link frequency characteristic may be sharply rolled-off (that is, highly rolled-off) at the lower cutoff frequency so that a lower sideband signal may be suppressed and a transmission signal including primarily the upper sideband signal may be provided to the receiver.

As will be described later, in the present disclosure, the above-described single sideband transmission technique may be applied with respect to each of a low-band (LB) signal and a high-band (HB) signal which constitute the dual-band. With this configuration, it is possible to provide a waveguide link channel which is capable of transmitting a larger amount of data while maintaining a power spectrum for each of the signals.

FIG. 2 is an exemplary diagram illustrating a dual-band plastic waveguide transmission system according to one embodiment of the present disclosure.

As illustrated in FIG. 2, the dual-band plastic waveguide transmission system may be provided with an RF transmitter 110, an RF receiver 120, a transmission-side interconnecting device including microstrip-to-waveguide transitions (MWTs) 140 and 141, a reception-side interconnecting device including MWTs 142 and 143, duplexers 150 and 151, and a bi-directional plastic waveguide (hereinafter referred to as "E-TUBE") device 130.

The RF transmitter 110 may be configured to transmit a first signal "Data In[0]" and a second signal "Data In[1]", which are up-converted to a first carrier frequency $f_1$ and a second carrier frequency $f_2$ higher than the first carrier frequency $f_1$, respectively. To this end, the RF transmitter 110 may include mixers 111 and 112, and power amplifiers (PAs) 113 and 114 for up-converting the first signal and the second signal to the first carrier frequency and the second carrier frequency, respectively. In addition, although not illustrated herein, the RF transmitter 110 may include a phase-locked loop (PLL) for providing a clock signal to the RF transmitter 110, a multiplier for converting the clock signal to the carrier frequency, and the like.

The RF receiver 120 may be configured to receive the first signal of the first carrier frequency and the second signal of the second carrier frequency and downconvert them. The RF receiver 120 may be configured to include constituent elements for receiving the signals transmitted from the RF transmitter 110. For example, the RF receiver 120 may include low noise amplifiers (LNA) 121 and 122, and downconverting mixers 123 and 124. Although not illustrated herein, the RF receiver 120 may include a phase synchronization device, a phase lock loop (PLL), a multiplier, and the like.

The E-TUBE device 130 may be configured to provide a communication channel between the RF transmitter 110 and the RF receiver 120. The E-TUBE device 130 may include a plastic (or dielectric) waveguide for signal transmission/reception, and a metal cladding surrounding the plastic waveguide. The metal cladding may confine radio waves and prevent electromagnetic leakage. In one embodiment, the plastic waveguide of the E-TUBE device 130 may have a cross-section of rectangular shape. The shape of the plastic waveguide is not limited thereto but may be various shapes, such as a circular cross-section and the like.

The transmission-side interconnecting device may be configured to connect the RF transmitter 110 and the E-TUBE device 130, and may include the MWTs 140 and 141 arranged at the transmission side. The reception-side interconnecting device may be configured to connect the E-TUBE device 130 and the RF receiver 120, and may include the MWTs 142 and 143 arranged at the reception side. According to one embodiment, each of the interconnecting devices may be implemented with a microstrip, a strip, a coplanar waveguide, or the like.

The first MWT 142 may be configured to deliver the first signal from the E-TUBE device 130 to the RF receiver 120, and the second MWT 143 may be configured to deliver the second signal from the E-TUBE device 130 to the RF receiver 120. The duplexer 151 may be connected to each of the first MWT 142 and the second MWT 143 and configured to deliver each of the first signal and the second signal from the E-TUBE device 130. Further, the duplexer 151 may be configured to couple or separate the first signal and the second signal to or from each other for preventing crosstalk between the first signal and the second signal. Similarly, the duplexer 150 and the MWTs 140 and 141 may be provided between the E-TUBE device 130 and the RF transmitter 110.

The first signal may be a low-band (LB) signal 160, and a frequency bandwidth of the LB signal 160 may be adjusted such that the LB signal 160 is received as an upper sideband signal 162 having a preset bandwidth with reference to the first carrier frequency. Further, the second signal may be a high-band (HB) signal 170, and a frequency bandwidth of the HB signal 170 may be adjusted such that the HB signal 170 is received as a lower sideband signal 172 having a preset bandwidth with reference to the second carrier frequency. To do this, as will be described later, the frequency bandwidth of the first signal may be adjusted by the E-TUBE device 130 and the first MWT 140, and the frequency bandwidth of the second signal may be adjusted by the E-TUBE device 130 and the second MWT 141. The first signal and the second signal, the frequency bandwidths of which have been adjusted in this way, may be received by the RF receiver 120 in the single sideband transmission via the E-TUBE device 130. Thus, the RF receiver 120 may receive the first signal and the second signal, the frequency bandwidths of which have been adjusted. That is, the dual-band plastic waveguide transmission system may provide the waveguide link channel to which the single sideband transmission is applied in a dual manner.

For example, the first carrier frequency $f_1$ may be 115 GHz, and the second carrier frequency $f_2$ may be 170 GHz. The first signal and the second signal may be adjusted to be transmitted in a bandwidth of about 30 GHz with reference to the respective carrier frequencies. The E-TUBE device 130 may receive the first signal and the second signal adjusted in such a bandwidth. In this case, the first signal and the second signal in the bandwidth of 115 GHz to 170 GHz may be transmitted as the LB signal in the upper sideband and the HB signal in the lower sideband via the plastic waveguide of the E-TUBE device 130, respectively. This makes it possible to implement a dual-band wideband ultra-high-speed transmission.

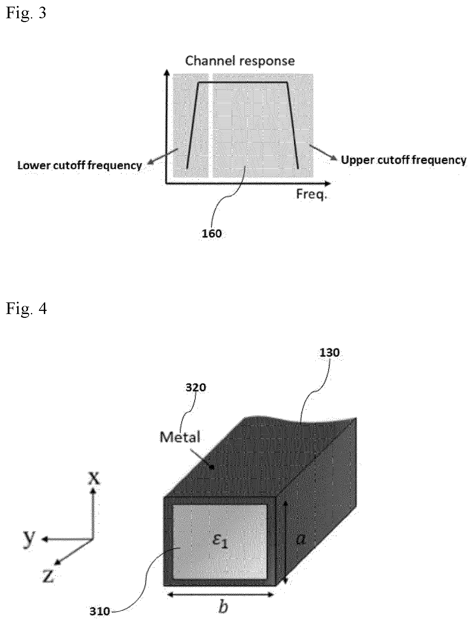

FIG. 3 is an exemplary diagram illustrating a lower cutoff frequency and an upper cutoff frequency of a plastic waveguide channel response.

The frequency bandwidths of the first signal (that is, the low-band signal) and the second signal (that is, the high-band signal) may be adjusted by adjusting the lower cutoff frequency and the upper cutoff frequency, respectively. In the first signal (that is, the low-band signal) 160 as illustrated in FIG. 2, the frequency bandwidth of the first signal may be adjusted by adjusting the lower cutoff frequency using the E-TUBE device 130, and may also be adjusted by adjusting the upper cutoff frequency using the first MWT 142. Similarly, in the second signal (that is, the high-band signal) 170, the frequency bandwidth of the second signal may be adjusted by adjusting the upper cutoff frequency using the E-TUBE device 130, and may also be adjusted by adjusting the lower cutoff frequency using the second MWT 143.

FIG. 4 is an exemplary diagram illustrating a configuration of a plastic waveguide device according to one embodiment of the present disclosure.

As illustrated in FIG. 4, the E-TUBE device 130 may include a plastic waveguide (that is, a dielectric tube) 310 having a rectangular cross-section, and a metal cladding 320 that surrounds the dielectric tube 310. In this case, the lower cutoff frequency of the first signal and the upper cutoff frequency of the second signal may be adjusted based on a transverse length b and a longitudinal length a of the cross-section of the dielectric tube 310.

Specifically, a cutoff frequency $f_{nm}$ in the dielectric tube 310 illustrated in FIG. 4 may be determined according to Formula below:

[Formula 1]

$$f_{nm} = c\sqrt{\left(\frac{n}{2a}\right)^2 + \left(\frac{m}{2b}\right)^2}$$

Where, $c$ represents a wave speed of the dielectric tube and may be determined based on permittivity $\varepsilon_1$ and permeability $\mu_1$ of the dielectric tube, $a$ represents the longitudinal length of the dielectric tube, $b$ represents the transverse length of the dielectric tube, and $n$ and $m$ are integers and represent wave mode coefficients.

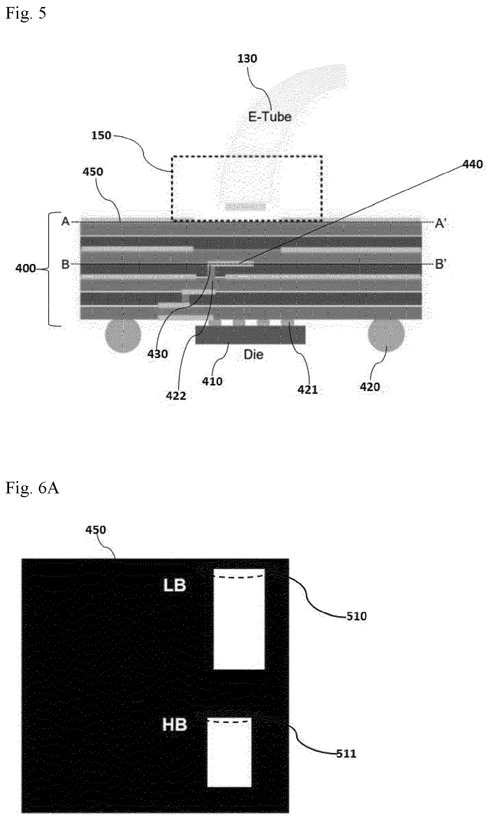

FIG. 5 is an exemplary diagram illustrating a cross-section of a package substrate including the MWT according to one embodiment of the present disclosure.

The dual-band plastic waveguide transmission system according to the present disclosure may be configured such that a transmitter-side board and a receiver-side board are connected to each other via the E-TUBE device 130. Each board may include an integrated circuit (IC) package. The IC package may include a package substrate 400 on which an RF chip (die) 410 and the MWTs 140, 141, 142 and 143 are formed. The IC package may be connected to a printed circuit board (PCB) (not illustrated) via a solder ball 420.

In one embodiment, the RF chip 410 may be disposed below the package substrate 400 and may be attached to the package substrate 410 using bumps 421. Further, a via 422 serving as a passage for delivering the RF signal may be formed between the RF chip 410 and the package substrate 400.

The MWTs 140, 141, 142 and 143 may include a feeding line 430, a probe element 440, and a slotted ground plane 450. The feeding line 430 may supply the RF signal via the via 422 formed between the RF chip 410 and the package substrate 400. The probe element 440 may receive the RF signal from the feeding line 430 and radiate the same toward the slotted ground plane 450. The RF signal radiated from the probe element 440 may pass through the slotted ground plane 450 and may transmitted to the E-TUBE device 130. The MWTs 140, 141, 142 and 143 may be connected to the E-TUBE device 130 via the duplexers 150 and 151.

As described above, the first signal (that is, the low-band signal) may be delivered to the first MWT 142, and the second signal (that is, the high-band signal) may be delivered to the second MWT 143. In this case, the probe element 440 and the slotted ground plane 450 of each MWT may be used to adjust the frequency bandwidth of the respective signal. Specifically, the upper cutoff frequency of the first signal may be adjusted based on a length of the probe element 440 of the first MWT 142 and a slot dimension of the slotted ground plane 450 of the first MWT 142. Similarly, the lower cutoff frequency of the second signal may be adjusted based on a length of the probe element 440 of the second MWT 143 and a slot dimension of the slotted ground plane 450 of the second MWT 143.

FIG. 6A is an exemplary diagram illustrating the slotted ground plane along line A-A' of FIG. 5.

As illustrated in FIG. 6A, a slot corresponding to the low-band (LB) signal and a slot corresponding to the high-band (HB) signal may be formed in the slotted ground plane 450. In this case, as transverse lengths 510 and 511 of the slot increase, the cutoff of the corresponding signals may be decreased, while as the transverse lengths 510 and 511 decrease, the cutoff of the corresponding signals may be increased.

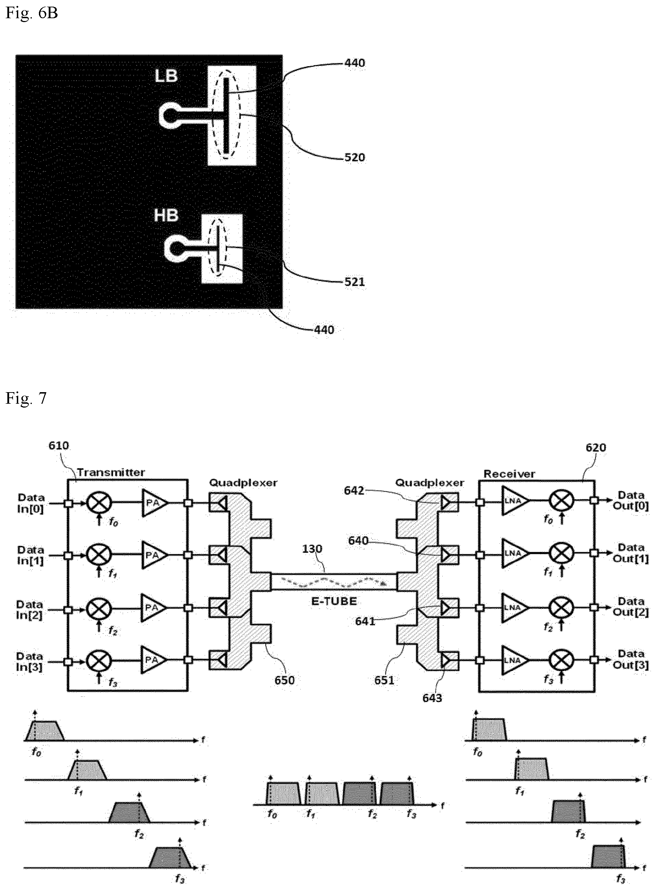

FIG. 6B is an exemplary diagram illustrating a probe element positioned along line B-B' of FIG. 5.

As illustrated in FIG. 6B, the probe element 440 for the low-band (LB) signal and the probe element 440 for the high-band (HB) signal may be formed along line B-B' of the package substrate 400. In this case, as longitudinal lengths 520 and 521 of the probe element 440 increase, the cutoff of the corresponding signals may be decreased, while as the longitudinal lengths 520 and 521 decrease, the cutoff of the corresponding signals may be increased.

FIG. 7 is an exemplary diagram illustrating a multi-band plastic waveguide transmission system according to one embodiment of the present disclosure.

The plastic waveguide transmission system according to the present disclosure may be implemented as the dual-band transmission system capable of transmitting two RF signals as well as the multi-band transmission system capable of transmitting a plurality of RF signals. The multi-band transmission system may be configured to transmit other low-band signals further lower than the low-band signal in the dual-band and other high-band signals further higher than the high-band signal in the dual-band.

As illustrated in FIG. 7, in a case in which the plastic waveguide transmission system is implemented as the multi-band transmission system capable of transmitting four RF signals, an RF receiver 620 may be configured to receive, from an RF transmitter 610, a first signal of the first carrier frequency $f_1$, a second signal of the second carrier frequency $f_2$ higher than the first carrier frequency $f_1$, a third signal of a third carrier frequency $f_0$ lower than the first carrier frequency $f_1$, and a fourth signal of a fourth carrier frequency $f_3$ higher than the second carrier frequency $f_2$.

In the multi-band transmission system, the interconnecting device may include a first MWT 640 configured to deliver the first signal from the E-TUBE device 130 to the RF receiver 620, a second MWT 641 configured to deliver the second signal from the E-TUBE device 130 to the RF receiver 620, a third MWT 642 configured to deliver the third signal from the E-TUBE device 130 to the RF receiver 620, and a fourth MWT 643 configured to deliver the fourth signal from the E-TUBE device 130 to the RF receiver 620.

A frequency bandwidth of the first signal may be adjusted by the E-TUBE device 130 and the first MWT 640 such that the first signal is received as the upper sideband signal. A frequency bandwidth of the second signal may be adjusted by the E-TUBE device 130 and the second MWT 641 such that the second signal is received as the lower sideband signal. A frequency bandwidth of the third signal may be adjusted by the E-TUBE device 130 and the third MWT 642 such that the third signal is received as the upper sideband signal. A frequency bandwidth of the fourth signal may be adjusted by the E-TUBE device 130 and the fourth MWT 643 such that the fourth signal is received as the lower sideband signal.

The multi-band transmission system configured as above may include a quad-plexer 650 for delivering the first signal, the second signal, the third signal and the fourth signal from the E-TUBE device 130.

Further, the RF transmitter 610 may include corresponding constituent elements for transmitting the signals to the RF receiver 620, and may include a quad-plexer and MWTs provided between the E-TUBE device 130 and the RF transmitter 610.

In this case, the frequency bandwidth of the first signal and the frequency bandwidth of the third signal may be adjusted by adjusting the lower cutoff frequency using the E-TUBE device 130. The frequency bandwidth of the second signal and the frequency bandwidth of the fourth signal may be adjusted by adjusting the upper cutoff frequency using the E-TUBE device 130.

In addition, the frequency bandwidth of the first signal may be adjusted by adjusting the upper cutoff frequency using the first MWT 640, the frequency bandwidth of the second signal may be adjusted by adjusting the lower cutoff frequency using the second MWT 641, the frequency bandwidth of the third signal may be adjusted by adjusting the upper cutoff frequency using the third MWT 642, and the frequency bandwidth of the fourth signal may be adjusted by adjusting the lower cutoff frequency using the fourth MWT 643.

The adjustments of the lower cutoff frequency and the upper cutoff frequency by the E-TUBE device 130 and the MWTs 640, 641, 642 and 643 may be implemented in the same manners as those described with reference to FIG. 3 to FIG. 6B.

In the above, various exemplary embodiments have been described such that those skilled in the art may utilize or practice the present disclosure. Various modifications of these exemplary embodiments will be apparent to those skilled in the art, and generic principles defined herein may be applied to other exemplary embodiments without departing from the scope of the present disclosure. Therefore, the present disclosure is not limited to the exemplary embodiments described herein, but should be interpreted in the broadest scope encompassing the principles and novel features described herein.

**Claims**

1. A radio frequency (RF) communication system, comprising:

   an RF receiver configured to receive, from an RF transmitter, a first signal of a first carrier frequency and a second signal of a second carrier frequency higher than the first carrier frequency; a plastic waveguide device configured to provide a communication channel between the RF transmitter and the RF receiver; and an interconnecting device including a first microstrip-to-waveguide transition (MWT) configured to transmit the first signal from the plastic waveguide device to the RF receiver, and a second MWT configured to transmit the second signal from the plastic waveguide device to the RF receiver,
wherein a frequency bandwidth of the first signal is adjusted by the plastic waveguide device and the first MWT such that the first signal is received as an upper sideband signal, and a frequency bandwidth of the second signal is adjusted by the plastic waveguide device and the second MWT such that the second signal is received as a lower sideband signal.

2. The RF communication system of Claim 1, further comprising:
a duplexer connected to each of the first MWT and the second MWT and configured to transmit the first signal and the second signal from the plastic waveguide device.

3. The RF communication system of Claim 1, wherein the frequency bandwidth of the first signal is adjusted by adjusting a lower cutoff frequency using the plastic waveguide device, and the frequency bandwidth of the second signal is adjusted by adjusting an upper cutoff frequency using the plastic waveguide device.

4. The RF communication system of Claim 3, wherein the plastic waveguide device includes a dielectric tube having a rectangular cross-section, and wherein the lower cutoff frequency of the first signal and the upper cutoff frequency of the second signal are adjusted based on a transverse length and a longitudinal length of the cross-section of the dielectric tube.

5. The RF communication system of Claim 1, wherein the frequency bandwidth of the first signal is adjusted by adjusting an upper cutoff frequency using the first MWT, and the frequency bandwidth of the second signal is adjusted by adjusting a lower cutoff frequency using the second MWT.

6. The RF communication system of Claim 5, wherein each of the first MWT and the second MWT includes:

a probe element configured to receive a signal from a feeding line; and
a slotted ground plane through which the signal radiated from the probe element passes to be transmitted to the plastic waveguide device.

7. The RF communication system of Claim 6, wherein the upper cutoff frequency of the first signal is adjusted based on a length of the probe element of the first MWT and a slot dimension of the slotted ground plane of the first MWT, and wherein the lower cutoff frequency of the second signal is adjusted based on a length of the probe element of the second MWT and a slot dimension of the slotted ground plane of the second MWT.

8. The RF communication system of Claim 1, wherein the RF receiver is configured to further receive, from the RF transmitter, a third signal of a third carrier frequency lower than the first carrier frequency, and a fourth signal of a fourth carrier frequency higher than the second carrier frequency, wherein the interconnecting device further includes:

a third MWT configured to transmit the third signal from the plastic waveguide device to the RF receiver; and
a fourth MWT configured to transmit the fourth signal from the plastic waveguide device to the RF receiver, and
wherein a frequency bandwidth of the third signal is adjusted by the plastic waveguide device and the third MWT such that the third signal is received as the upper sideband signal, and a frequency bandwidth of the fourth signal is adjusted by the plastic waveguide device and the fourth MWT such that the fourth signal is received as the lower sideband signal.

9. The RF communication system of Claim 8, further comprising:
a quadplexer configured to transmit the first signal, the second signal, the third signal, and the fourth signal from the plastic waveguide device.

10. The RF communication system of Claim 8, wherein the frequency bandwidth of the first signal and the frequency bandwidth of the third signal are adjusted by adjusting a lower cutoff frequency using the plastic waveguide device, and the frequency bandwidth of the second signal and the frequency bandwidth of the fourth signal are adjusted by adjusting an upper cutoff frequency using the plastic waveguide device.

11. The RF communication system of Claim 8, wherein the frequency bandwidth of the first signal is adjusted by adjusting an upper cutoff frequency using the first MWT, the frequency bandwidth of the second signal is adjusted by adjusting a lower cutoff frequency using the second MWT, the frequency bandwidth of the third signal is adjusted by adjusting the upper cutoff frequency using the third MWT, and the frequency bandwidth of the fourth signal is adjusted by adjusting the lower cutoff frequency using the fourth MWT.

Fig. 1

Fig. 2

Fig. 3

Channel response

Lower cutoff frequency

Upper cutoff frequency

Freq.

160

Fig. 4

130

320

Metal

x

y

z

$\varepsilon_1$

a

b

310

Fig. 5

Fig. 6A

Fig. 6B

Fig. 7

## INTERNATIONAL SEARCH REPORT

| International application No. |
|---|
| **PCT/KR2023/016936** |

| A. | CLASSIFICATION OF SUBJECT MATTER |
|---|---|

**H01P 5/18**(2006.01)i

According to International Patent Classification (IPC) or to both national classification and IPC

| B. | FIELDS SEARCHED |
|---|---|

Minimum documentation searched (classification system followed by classification symbols)

H01P 5/18(2006.01); H01P 1/16(2006.01); H01P 11/00(2006.01); H01P 3/08(2006.01); H01P 3/16(2006.01); H04B 3/40(2006.01); H04B 3/52(2006.01); H05K 1/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 듀얼밴드(dual band), 플라스틱 웨이브가이드(plastic waveguide), 마이크로스트립-대-웨이브가이드 트랜지션(MWT), 컷오프(cutoff), 주파수(frequency)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-1741616 B1 (KOREA ELECTRONICS TECHNOLOGY INSTITUTE) 30 May 2017 (2017-05-30)<br>See paragraphs [0027]-[0032]; claim 1; and figures 7-8 and 10. | 1-11 |
| Y | KR 10-2016-0107388 A (KOREA ADVANCED INSTITUTE OF SCIENCE AND TECHNOLOGY) 19 September 2016 (2016-09-19)<br>See paragraphs [0059]-[0063]; claims 4 and 7-8; and figure 7. | 1-11 |
| Y | KR 10-0199019 B1 (ELECTRONICS AND TELECOMMUNICATIONS RESEARCH INSTITUTE) 15 June 1999 (1999-06-15)<br>See claim 1. | 2,9 |
| A | KR 10-2018-0051195 A (KOREA ADVANCED INSTITUTE OF SCIENCE AND TECHNOLOGY) 16 May 2018 (2018-05-16)<br>See paragraphs [0004]-[0006]; and figure 1. | 1-11 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2024** | **01 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/016936** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 06-069121 B2 (NIPPON TELEGRAPH AND TELEPHONE CORP.) 31 August 1994 (1994-08-31) See claim 1. | 1-11 |

Form PCT/ISA/210 (second sheet) (July 2022)

**INTERNATIONAL SEARCH REPORT**
Information on patent family members

International application No.

**PCT/KR2023/016936**

| Patent document cited in search report | | | Publication date (day/month/year) | Patent family member(s) | | | Publication date (day/month/year) |
|---|---|---|---|---|---|---|---|
| KR | 10-1741616 | B1 | 30 May 2017 | KR | 10-2017-0025639 | A | 08 March 2017 |
| KR | 10-2016-0107388 | A | 19 September 2016 | CN | 107534198 | A | 02 January 2018 |
| | | | | CN | 114284669 | A | 05 April 2022 |
| | | | | EP | 3267528 | A1 | 10 January 2018 |
| | | | | EP | 3267528 | A4 | 17 October 2018 |
| | | | | EP | 3267528 | B1 | 03 November 2021 |
| | | | | JP | 2018-507657 | A | 15 March 2018 |
| | | | | JP | 6534747 | B2 | 26 June 2019 |
| | | | | KR | 10-1693843 | B1 | 10 January 2017 |
| | | | | US | 10686241 | B2 | 16 June 2020 |
| | | | | US | 11289788 | B2 | 29 March 2022 |
| | | | | US | 2018-0040937 | A1 | 08 February 2018 |
| | | | | US | 2020-0274222 | A1 | 27 August 2020 |
| | | | | WO | 2016-140401 | A1 | 09 September 2016 |
| KR | 10-0199019 | B1 | 15 June 1999 | KR | 10-1998-0044284 | A | 05 September 1998 |
| KR | 10-2018-0051195 | A | 16 May 2018 | CN | 108064115 | A | 22 May 2018 |
| | | | | EP | 3319167 | A1 | 09 May 2018 |
| | | | | KR | 10-1963936 | B1 | 31 July 2019 |
| | | | | US | 2018-0131084 | A1 | 10 May 2018 |
| JP | 06-069121 | B2 | 31 August 1994 | JP | 61-108201 | A | 26 May 1986 |

Form PCT/ISA/210 (patent family annex) (July 2022)